# EUROPEAN PATENT SPECIFICATION

(11) **EP 1 513 668 B1**
(45) Date of publication and mention of the grant of the patent: **10.08.2011**
(21) Application number: 03721140.6
(22) Date of filing: 12.05.2003
(51) Int. Cl.: B29C 63/02

(54) **APPARATUS AND METHOD FOR CONTROLLING ROLLER ROTATION OF LAMINATOR**
VORRICHTUNG UND VERFAHREN ZUR STEUERUNG DER WALZENDREHUNG EINER LAMINIERMASCHINE
APPAREIL ET PROCEDE DE COMMANDE DE LA ROTATION DU CYLINDRE D'UN DISPOSITIF DE COUCHAGE

(30) Priority: 21.05.2002 KR 2002015434
(43) Date of publication of application: 16.03.2005
(73) Proprietor: ROYAL SOVEREIGN QINGDAO INC., Chengyang District Qingdao (CN)
(72) Inventor: HONG, Dong-Won, 407-832 Incheon-si (KR)
(74) Representative: Verscht, Thomas Kurt Albert
(86) International application number: PCT/KR2003/000932
(87) International publication number: WO 2003/097331

(56) References cited:
- EP-A- 0 356 221
- KR-Y1- 200 184 889
- KR-Y1- 200 263 043
- KR-Y1- 200 275 348
- US-A- 4 865 675

## Description

### Technical Field

The present invention relates to a laminator and more particularly to an apparatus and method for controlling roller rotation of a laminator, capable of automatically removing a film upon abnormal operation of the laminator when the laminating film is wound on a roller, or film jam is generated in the inside of the laminator.

### Background Art

A laminator is an apparatus used for coating both sides of a plate shaped product using a film in order to improve durability of the plate shaped product such as a paper and a panel.

Generally, a laminator includes, as primary elements, a heating roller for applying heat on a laminating film upon coating; a pressing roller for making the films on both sides stuck on the product by applying pressure on the heated laminating film; and a motor for applying rotational force on the heating roller and the pressing roller.

Operation of the laminator will be described. After a film is inserted into the laminator, heat is applied to the laminating film by the heating roller. The film on which heat is applied, changes into a flexible status where sticking is possibly performed, and pressure is applied on that flexible film by the pressure roller, so that a pair of the laminating films is stuck on each other. At the moment, an adhesive could be provided on a contact surface of the film so that adhesive property may be improved.

But, in case that the temperature appropriate for thickness of the laminating film is not properly adjusted or a small size laminating film is used in such laminator, the heated laminating film is wound on the heating roller or the pressing roller and operation of the laminator is not normally performed.

Also, in case that the film is not inserted in a correct angle but in a twisted angle when inserted into the laminator, a jam of the film is generated in the inside of the laminator and operation of the laminator is not normally performed from time to time.

A method of a related art used for removing the laminating film from the inside of the laminator in such cases, will be described in the following.

Firstly, a method for forcibly removing the film after stopping and disassembling the laminator.

Secondly, a method for removing the film such that a dual-direction rotating motor is installed so that a user may manually adjust rotational direction of the motor in order to rotate backward the heating roller and the pressing roller in the inside of the laminator when the film is wound in the inside of the laminator.

Thirdly, a method suggested in the Korean Utility Model Registration No.263043, in which a predetermined device for detecting thickness of the film piled up is installed on the outer periphery of the roller, so that the motor is automatically rotated backward for the film to be removed if the film is wound on the roller and reaches up to a predetermined thickness.

According to the above first method, visiting of an expert is required to disassemble the laminator and the laminator should be assembled again after the laminator is disassembled and the film is removed.

According to the second method, a user should continuously observe whether the film is normally inserted in or drawn out and should directly adjust operation of the laminator. Also, in case that much time lapses and the laminating film is deeply wound in the inside of the laminator while a user does not observe the laminator upon coating job, the laminator machine itself including the roller might be destroyed.

According to the third method, winding of the film on the roller could be detected if and only if the film is continuously wound on the roller and reaches up to a considerable thickness. Therefore, abnormal operation of the laminator could not be detected until malfunction already occurs for a considerable period of time. Also, a predetermined device for detecting the thickness of the piled up film should be installed on all the rollers where there exist possibility that malfunction occurs, so that this method could not be applied to the laminator on which the rollers are formed in multi-levels. Also, due to inaccuracy of mechanical detection of the film thickness, reliability could not be secured in detecting malfunction of the laminator.

With respect to the prior art further attention is drawn to U.S. patent US-A-4,865,675 from which a process and an apparatus for hot pressure adhesion treatments is known. A hot press device has a pair of hot press rollers for heating and pressing a treatment object therebetween while rotating, and pairs of delivery rollers are arranged before and after the pair of hot press rollers. The treatment object passes back and forth through the pair of hot press rollers, and a controller controls the delivery rollers so that the circumferential speeds of the respective delivery rollers located downstream in the forward or reverse passing direction of the treatment object can be increased.

Finally, from EP-A-0 356 221 an automatic laminator for laminating film on a board is known. It includes a control unit, input and output roller tables and a control cabinet. The control unit includes a tacking system, film supply rolls, takeup rolls, lamination rolls, a cutting system and a vacuum system and holds the board stationary between the completion of the tacking operation and the beginning of the lamination operation and starts the lamination at substantially the same position where the tacking has been effected, thus improving the efficiency of operation and enabling a reduction in the time, pressure, and temperature required for the successful performance of tacking.

### Disclosure of invention

To solve the above-indicated problems, it is, therefore, an object of the present invention to provide an apparatus and method for controlling roller rotation of a laminator, which is convenient and reliable.

The present invention relates to an apparatus for controlling roller rotation of a laminator as defined in claim 1. Further, the present invention relates to a method for controlling roller rotation of a laminator as defined in claim 5.

Preferred embodiments of the invention are disclosed in the dependent claims.

An apparatus for controlling roller rotation of a laminator according to the present invention, includes: rollers installed in even numbers, for applying heat and pressure in order to perform coating using a laminating film; a film detecting sensor in an entrance side, formed in the front side of the roller with respect to the progressing direction of the laminating film, for detecting whether the laminating film is inserted or not; a film detecting sensor in an exit side, formed in the rear side of the roller, for detecting whether the laminating film is drawn out or not; a dual-direction rotating motor for rotating the roller forward or backward depending on a detecting signal from the film detecting sensors in the entrance side and the exit side; a microprocessor for receiving a detecting signal from the sensor and transmitting a controlling signal to the dual-direction rotating motor; and a power transferring unit for transferring power from the dual-direction motor to the roller.

A method for controlling roller rotation of a laminator according to the present invention, includes the steps of : counting time from the moment that insertion of a laminating film is detected by a film detecting sensor in an entrance side after the laminating film is inserted into the laminator; detecting, at a film detecting sensor in an exit side, the laminating film after waiting time T1 that is necessary for normal laminating operation lapses; judging that normal laminating is performed if the laminating film is detected before the waiting time T1 lapses, and removing the film by rotating backward the roller for a predetermined period of time T2 under the judgment that normal laminating is not performed if the laminating film is not detected even after the waiting time T1 lapses.

### Brief Description of Invention

The above objects, features and advantages of the present invention will become more apparent from the following detailed description when taken in conjunction with the accompanying drawings, in which:
Fig.1 is a perspective view of an appearance of a laminator adopting an apparatus for controlling roller rotation of a laminator according to the present invention;
Fig.2 is a perspective view of a laminator whose upper cover is separated in a laminator adopting an apparatus for controlling roller rotation according to the present invention;
Fig.3 is an exploded, perspective view of a crucial part of a laminator adopting an apparatus for controlling roller rotation according to the present invention;
Fig.4 is a schematic, cross-sectional view taken along line A-A' in Fig.2, illustrating operation of an apparatus for controlling roller rotation of a laminator according to the present invention; and
Fig.5 is a flowchart illustrating a method for controlling roller rotation of a laminator according to the present invention.

### Best Mode for Carrying out the Invention

A preferred embodiment of the present invention will now be described with reference to the accompanying drawings. The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

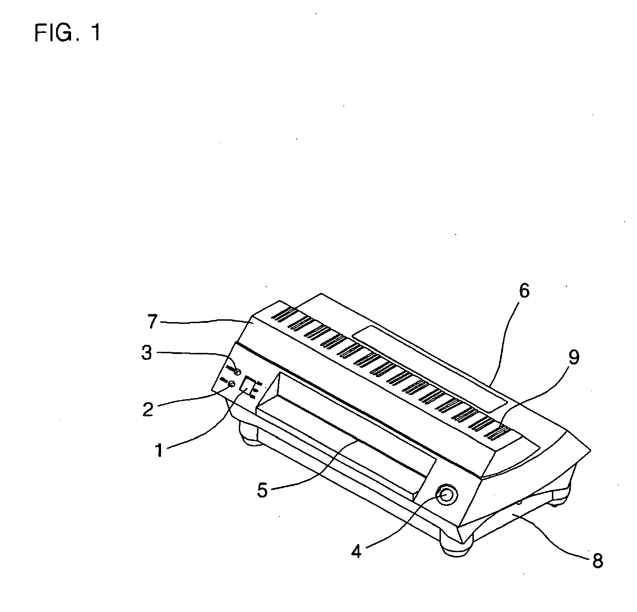

Fig.1 is a perspective view of an appearance of a laminator adopting an apparatus for controlling roller rotation of a laminator according to the present invention.

Referring to Fig.1, an appearance of the present invention includes an upper cover 7 and a lower cover 8 forming an appearance of the laminator, and the upper cover 7 includes: a power switch 1 for controlling on/off of the laminator, a standby indicating lamp 2 for indicating an operation standby status of a laminator; a power indicating lamp 3 for indicating a status that power of the laminator is turned on; a temperature adjusting member 4 for properly adjusting temperature depending on thickness of a laminating film; and a receiving member 5 formed lengthwise in the front side, for receiving the laminating film.

Also, a drawing member 6 through which a coated laminating film is drawn out is provided in the rear side of the upper cover 7, and a plurality of heat emitting members 9 for emitting heat from the inside of the laminator, is provided on the front side of the upper cover 7.

Mores specifically, for the power switch 1, a switching means of three steps for controlling status of forward rotation, backward rotation, and off status of the laminator, is used. With such construction, forward and backward rotations of the laminator could be controlled by direct operation of a user.

Also, the heat emitting member 9 has a plurality of slits in a long hole shape, so that heat generated from the inside of the laminator may be swiftly emitted to the outside.

Also, for the temperature adjusting member 4, a rotary switch turned directly by a user is used, so that appropriate temperature may be adjusted.

Referring to Fig.1, operation of the laminator according to the present invention will be briefly described. In case that a user intends to operate the laminator, the power switch 1 is set to on-status where the roller is rotated forward, so that the roller may be rotated. Then, temperature of the temperature adjusting member 4 is appropriately selected depending on thickness of the laminating film, so that the heating roller in the inside of the laminator may be heated to an appropriate temperature. At the moment, the standby indicating lamp 2 keeps blinking until the heating roller reaches a temperature range appropriate for performance of laminating while the heating roller is heated, so that a user may recognize the standby status of the laminator, namely, the status that the laminator is not yet prepared for laminating operation.

If the heating roller reaches an appropriate temperature, the standby lamp 2 stops blinking and maintains lighted-up status, so that a user may recognize that the heating roller is prepared for laminating operation and perform laminating job.

In the meantime, in case that a user recognizes that the film is caught in the inside of the laminator, or the film is wound on the roller, a user could make the film drawn out through the receiving member 5 by directly controlling the power switch 1 in order to get the roller to be rotated backward.

Rest part not described in the foregoing will be described in more detail in the following.

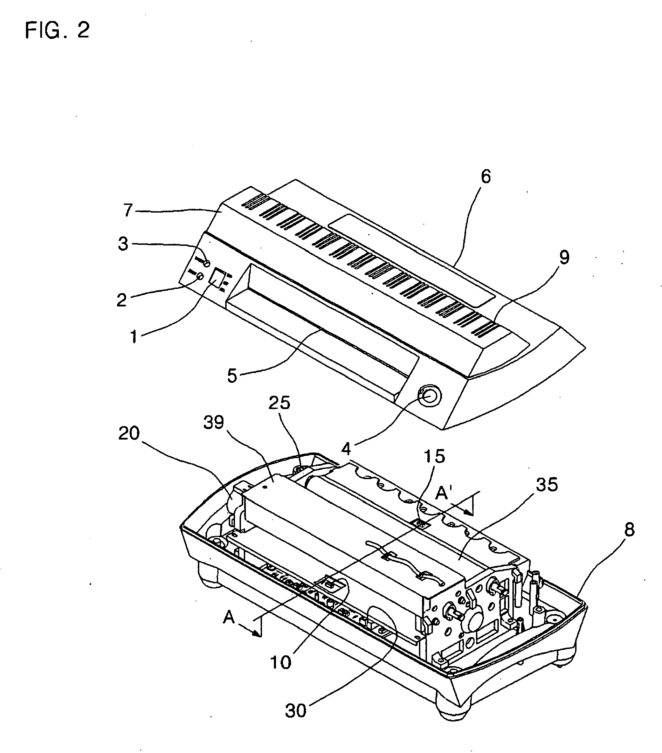

Fig.2 is a perspective view of a laminator whose upper cover is separated in a laminator adopting an apparatus for controlling roller rotation according to the present invention.

Referring to Fig.2, the laminator of the present invention includes: a controlling substrate 30 in which a temperature adjusting member 4, a power switch 1, a standby indicating lamp 2, a power indicating lamp 3 are connected by a predetermined wiring so that a series of operation by the laminator may be performed; a heating roller(not shown) formed up and down in pairs, for applying heat on the laminating film; a pressing roller 35 formed in the rear side of the heating roller, for pressing the laminating film; a dual-direction rotating motor 20 for applying rotational force on the heating roller 36 and the pressing roller 35; a power transferring unit 25 for transferring power of the dual-direction rotating motor 20 to the heating roller 36 and the pressing roller 35. Also, a heating cover 39 for safe performance of job is additionally provided on the outer side of the heating roller.

More specifically, the power transferring unit 25 has a plurality of gears for transferring torque of the dual-direction rotating motor 20. But, construction for power transfer is not necessarily limited to gears and a person skilled in the art would easily think of various power transferring mechanism such as a belt, a sprocket.

Particularly, a film detecting sensor 10 in an entrance side, for detecting insertion status of the laminating film to be inserted, is provided in the front of the heating roller, and a film detecting sensor 15 in an exit side, through which the laminating completed film is drawn out, is provided in the rear side of the pressing roller 35.

Also, for the film detecting sensor 10 in the entrance side and the film detecting sensor 15 in the exit side, a member for simultaneously emitting and receiving light is used, so that existence of the film is detected and insertion and drawing out of the film are detected if light emitted from a light emitting unit of the sensor is reflected from the film and received to a light receiving unit of the sensor. Here, for the light used for the sensors 10 and 15, an ultraviolet ray is used for stable operation of the machine.

Also, a microprocessor is mounted on the controlling substrate 30, for controlling the operation of the laminator on the whole. A plurality of entering lines connected to parts such as the sensors 10 and 15, the power switch 1, is connected to the controlling substrate 30 so that operation of the laminator may be stably performed.

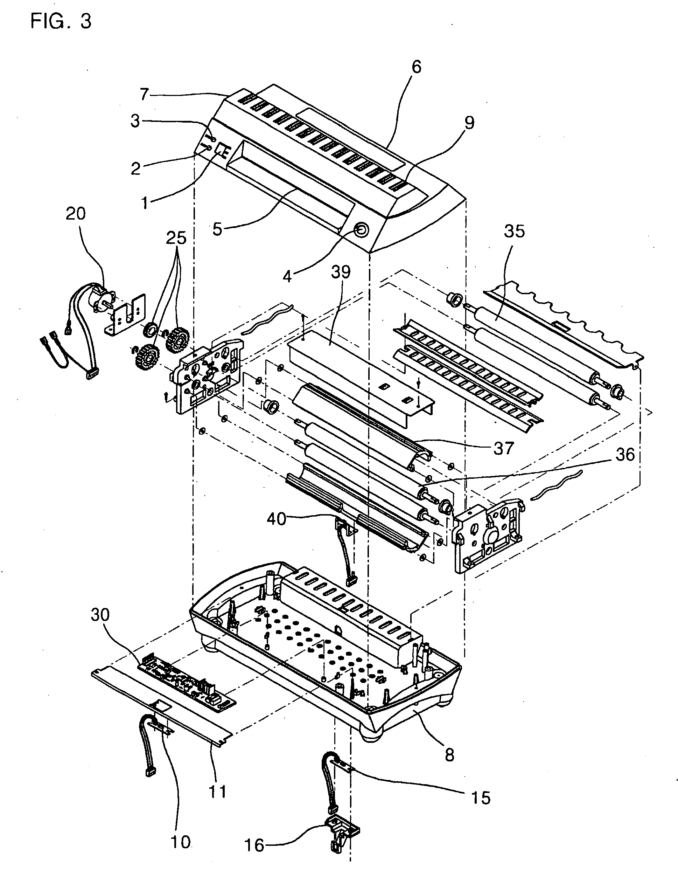

Fig.3 is an exploded, perspective view of a crucial part of a laminator adopting an apparatus for controlling roller rotation according to the present invention.

Referring to Fig.3, a heat applying unit 37 for applying heat on the heating roller 36, and the heating cover 39 formed on the upper side of the heat applying unit 37, for stable operation of the machine, are provided on the outer side of the heating roller 36.

The film detecting sensor 10 in the entrance side is fixed by a sensor fixing panel 11, and the sensor fixing panel 11 is settled down in its both ends on the boss formed on the inner lower side of the lower cover 8. At the moment, the light emitting unit and the light receiving unit of the film detecting sensor 10 in the entrance side are put on a hole formed on the central portion of the sensor fixing panel 11, so that projection and incidence of light may not be disturbed.

But, for the film detecting sensor 10 in the entrance side, any member whatsoever may be used as far as the member is formed in front of the heating roller 36, namely, the first roller, and detailed construction and method in installing the member are not limited to those shown in the drawing.

Also, the film detecting sensor 15 in the exit side is provided in the rear side of the pressing roller 36, in order to detect whether the coated film is normally drawn out or not. Also, the film detecting sensor 15 in the exit side is fixed by a sensor fixing unit 16 formed on the back of the lower cover 8. But, for the film detecting sensor 15 in the exit side, any member whatsoever may be used as far as the member is formed in the rear side of the pressing roller 35, namely, the final roller, and detailed construction and method in installing the member are not limited to the sensor fixing unit 16 shown in the drawing.

In the meantime, on the position adjacent to the heating roller 36, specifically on one side of the heat applying unit 37, a temperature sensor 40 for detecting the temperature of the heating roller 36 is formed, so that the appropriate temperature of the heating roller 36 may be known and coating of the laminating film may be swiftly performed depending on the thickness.

More specifically, if a user designates an appropriate temperature for the laminating film using the temperature adjusting member(refer to reference numeral 4 in Fig.1), the temperature sensor 40 detects the temperature of the heating roller 36, transferring the same to the controlling substrate 30 so that the heating roller 36 may be heated to the designated temperature. The microprocessor of the controlling substrate 30 controls the power of the heat applying unit 37 and the standby indicating lamp 2 depending on the temperature of the temperature sensor 40, thereby controlling application of the power to the heat applying unit 37 and the lighting of the standby indicating lamp 2.

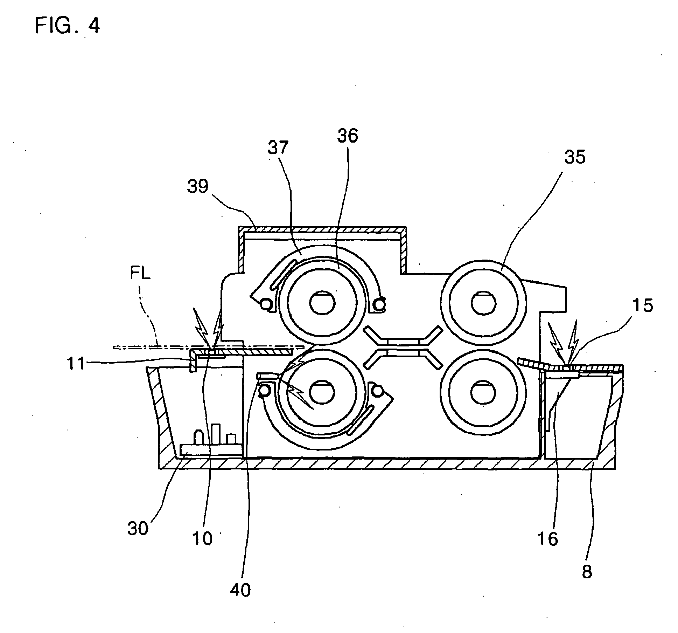

Fig.4 is a schematic, cross-sectional view taken along line A-A' in Fig.2, illustrating operation of an apparatus for controlling roller rotation of a laminator according to the present invention.

Referring to Fig.4, an apparatus and method for controlling roller rotation of a laminator according to the present invention will be described in the following.

If the laminating film FL is inserted into the inside of the laminator by a user after the temperature of the heating roller 36 reaches an appropriate temperature, the laminating film is detected by the film detecting sensor 10 in the entrance side. At the moment, a detecting signal from the film detecting sensor 10 in the entrance side due to insertion of the film, is transferred to the microprocessor formed in the controlling substrate 30, so that time from the moment that insertion of the film is detected, is counted.

Then, when the film is drawn out after laminating is performed by the heating roller 36 and the pressing roller 35, the film detecting sensor 15 in the exit side detects whether the film is drawn out or not, so that normal performance of coating for laminating film could be checked.

But, in case that coating is not normally performed, the film is not drawn out to the drawing member(refer to reference numeral 6 in Fig.1).

In that case, the film is not detected by the film detecting sensor 15 in the exit side even when a predetermined time T1 lapses after the film is detected by the film detecting sensor 10 in the entrance side, whereby the microprocessor of the controlling substrate 30 judges that laminating is not normally performed, controlling the rollers 35 and 36 to rotate backward automatically.

In the meantime, according to many experiments, if the film is not detected by the film detecting sensor 15 in the exit side even when 17 second through 19 second lapses after the film is detected by the film detecting sensor 10 in the entrance side, then coating job is considered not to be normally performed. In that case, the heating roller 35 and/or the pressing roller 35 are automatically rotated backward so that the film may be drawn out to the receiving member(refer to reference numeral 5 in Fig.1). Preferably, time for which the rollers 35 and 36 are rotated backward is about 18-19 second, which is sufficient for all the films to be removed.

For cases that laminating is not normally performed, there may exist a case that the film is wound on the rollers 35 and 36, for the heating roller 36 is not reached to the appropriate temperature depending on the thickness of the laminating film, and a case that an insertion angle of the laminating film is not correct, so that jam of the film is generated.

Also, for numbers of the heating roller 36 and the pressing roller 35 proposed in Fig.4, two rollers constituting one party are used, but the present invention is not limited to such two rollers, and may be applied to any case whatsoever as far as a plurality of rollers is formed in pairs, respectively. But, as far as the film detecting sensor 10 in the entrance side is provided in the front of the first roller and the film detecting sensor 15 in the exit side is provided in the back of the final roller, other elements may change to various shape whatsoever and do not matter much.

In the meantime, another embodiment of an apparatus for controlling roller rotation of the laminator according to the present invention will be described in the following.

Most of jam of the film or the case that the film is wound on the rollers 35 and 36 in the laminator are generated in the heating roller 36. Therefore, sensors are installed in the front and back of the heating roller 36 so that malfunction of the laminator may be more swiftly eliminated.

More specifically, the film detecting sensor in the entrance side and the film detecting sensor in the exit side are installed in the front and the back of the heating roller, respectively, so that whether the film is wound on the heating roller 36 is detected and malfunction of the laminator is more swiftly known, whereby malfunction of the machine and disorder thereof could be prevented. Also, in case that the film detecting sensors are installed in the front and back of the heating roller 36, the waiting time after the film is detected by the film detecting sensor in the entrance side, and the time for reverse rotation of the roller for removing the film could be reduced to the half of the time.

Preferably, the waiting time since the film is detected by the sensor in the entrance side is in the range of about 8-10 second, and the time for which the heating roller 36 is rotated backward after the film is not detected by the sensor in the exit side, is in the range of about 9-10 second.

In the meantime, it is possible that the sensors are provided in the front and the back of the heating roller 36 and also provided in the front and the back of the pressing roller 35 according to a specific usage status of the product as well as the embodiment proposed above. With such construction, if the film is not detected at the back after detected by the sensor in the front of the rollers 35 and 36, it is judged that laminating is not normally performed, so that the relevant roller is rotated in order to remove the film. Namely, generation of the film jam in the specific rollers 35 and 36 is detected, whereby the film is swiftly and exactly removed.

But, upon removal of the laminating film, the rollers in the front side with respect to the roller on which the film is wound, should be all rotated backward, so that the film may be swiftly removed.

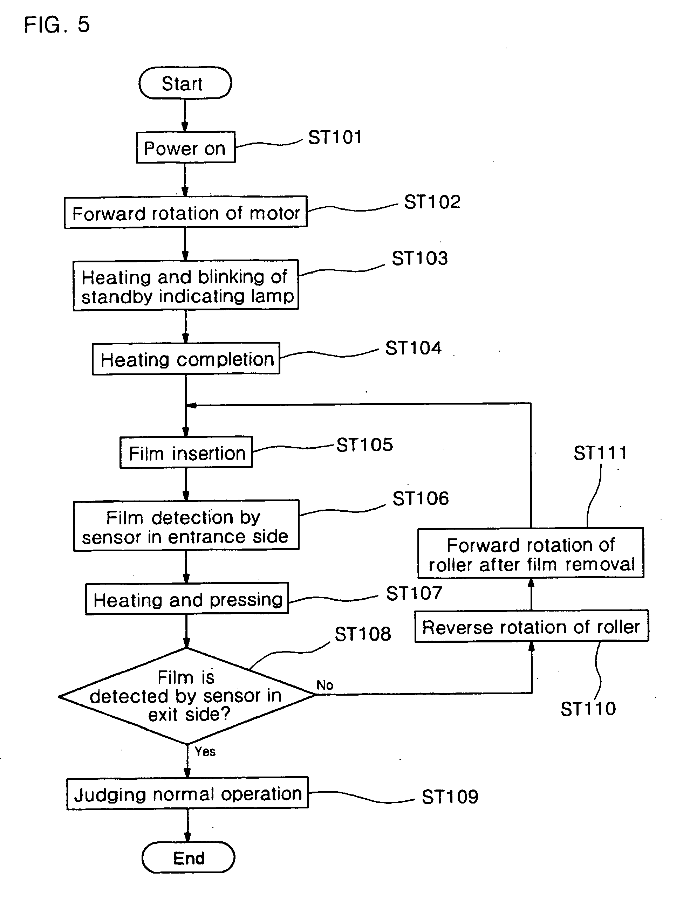

Fig.5 is a flowchart illustrating a method for controlling roller rotation of a laminator according to the present invention.

Referring to Fig.5, a method for controlling roller rotation of the laminator according to the present invention will be described in the following. Firstly, the power supply is applied to the laminator(step 101). If the power supply is applied, the motor and the roller are rotated forward, so that the standby step where laminating could be performed, is prepared(step 102). At the moment, the rollers 35 and 36 are always rotated so that transformation may not be generated in the rollers 35 and 36 of a circular shape while the power supply is applied and heat is applied to the rollers. Also, while the motor is rotated forward and heat is applied to the heating roller 36 so that the temperature of the heating roller(refer to reference numeral 36 in Fig.4) is raised and heating is continuously performed, the standby indicating lamp(refer to reference numeral 2 in Fig.1) keeps blinking so that a user may recognize that laminator is in a standby status(step 103). After the temperature of the heating roller 36 reaches an appropriate temperature(step 104), blinking of the standby indicating lamp 2 stops and a user inserts the laminating film into which material to be coated is inserted, into the receiving member(refer to reference numeral 5 in Fig.1) (step 105). In the meantime, the step of rotating forward the roller(step 102) and the step of heating the roller(step 103) may be performed simultaneously without any priority in an order, or whether one step is performed prior to the other step does not matter much. But, if heat is applied and the rollers begin to be transformed, then the rollers 35 and 36 are rotated in order to prevent transformation generation in the rollers 35 and 36.

After the film is inserted, the film detecting sensor in the entrance side(refer to reference numeral 10 in Fig.4) detects insertion of the laminating film, and the time from the moment that the film is detected, is counted(step 106). The film inserted into the laminator experiences heating and pressing, going through laminating process(step 107).

In the meantime, in case that laminating is not normally performed, namely, the film jam is generated or the film is wound on the rollers 35 and 36 while coating is performed in the inside of the laminator, the film is not drawn out through the drawing member(refer to reference numeral 6 in Fig.1). Therefore, the film detecting sensor 15 in the exit side detects whether the film is present or not, determining whether laminator normally operates or not through detection results of the film detecting sensor in the exit side(step 108). More specifically, if the film is detected by the film detecting sensor 15 in the exit side after the film is detected by the film detecting sensor 10 in the entrance side and a predetermined period of time T1 lapses, then it is judged that the laminator normally operates. But, if the film is not detected by the film detecting sensor 15 in then exit side even after the film is detected by the film detecting sensor 10 in the entrance side and a predetermined period of time T1 lapses, then it is judged that the laminator does not normally operate, namely, the film is wound on the rollers 35 and 36, or the film is caught in the inside of the laminator.

If the film is detected by the film detecting sensor 15 in the exit side before a predetermined period of time T1 lapses, it is judged that the laminator normally operate and a series of laminating process could be normally completed(step 109).

On the contrary, if the film is not is detected by the film detecting sensor 15 in the exit side even after the film is detected by the film detecting sensor 10 in the entrance side and a predetermined period of time T1 lapses, then it is judged that the laminator does not normally operate and a series of step for removing film begins.

In the meantime, the predetermined period of waiting time T1 before the film is detected by the film detecting sensor in the exit side after the film is inserted to the side of the film detecting sensor 10 in the entrance side, is preferably in the range of 14-16 second. But, the waiting time T1 may change depending on a number of rollers provided and rotational speed of the motor, and the above waiting time T1 is preferably well applied to the case that the heating roller 36 and the pressing roller 35 are provided in one pair, respectively.

Also, in case that the film is not detected by the film detecting sensor 15 in the exit side at the step of detecting the film(step 108) and it is judged that the laminator does not normally operate, the roller is rotated backward for a predetermined period of time T2 so that the film is removed from the inside of the laminator(step 110). For a method for rotating backward the roller, a method for rotating backward the dual-direction rotating motor is possibly used, and a variety of methods for mechanically reversing rotational direction using device may be adopted for a case of one direction rotating motor.

In the meantime, the time T2 for which the motor is rotated backward is preferably in the range of 18-20 second. The time T2 for reverse rotation of the motor is sufficient for removing the laminating film in the jam status in the inside of the laminator or wound on the roller, and could change depending on rotational speed of the motor and a number of rollers. Here, the time T2 for reverse rotation of the motor may be well preferably used for the case that a pair of heating rollers 36 and a pair of pressing rollers 35 are adopted.

If the film is completely removed at the step of rotating backward the motor(step 110), the roller is rotated forward again so that new laminating may be swiftly performed(step 111).

The reason why the heating roller 36 and the pressing roller 35 are not stopped during laminating job as described above, is for transformation not to be generated to the rollers 35 and 36 by heat generated from the inside of the laminator when the rollers 35 and 36 are stopped.

In case that the rollers are rotated forward, the step of inserting the film(step 105) where new laminating film is inserted, is performed so that the laminating job may be possibly performed again.

In case that the film detecting sensor 10 and 15 are provided in the front and the back of the heating roller 36, detection of abnormal operation of the laminator and removal of the film could be more swiftly accomplished.

The second embodiment of the method for controlling roller rotation of the laminator will be described in the following.

The second embodiment of the method for controlling roller rotation of the laminator are the same as the first embodiment except difference in the procedure by which the film is removed from the inside of the laminator. The step of removing the laminating film will be described in detail in the following.

A user could forcibly pull the film through the receiving member(refer to reference numeral 5 in Fig.1) during reverse rotation of the motor in the step of removing the laminating film(step 110 in Fig.5). In that case, the film could be more swiftly and easily removed than the case that the film is removed by reverse rotation of the motor. If the film is forcibly removed through the receiving member(refer to reference numeral 5 in Fig.1) by external force of a user, then the film is not detected by the film detecting sensor 10 in the entrance side. Therefore, at the moment, the controlling substrate(refer to reference numeral 30 in Fig.3) judges that the laminating film is completely removed from the receiving member 5, so that the rollers 35 and 36 are rotated forward again even before a predetermined period of time T2 lapses.

The foregoing second embodiment of the method for controlling roller rotation of the laminator could remove the film that is not normally laminated more swiftly and reliably, thereby improving speed of the laminating process.

In the meantime, if the film is seriously wound on the roller, or is not easily removed from the inside of the laminator, the rollers 35 and 36 are continuously set to the position for reverse rotation by the power switch, whereby removal of the film could be reliably performed.

And, if the film is not removed in laminator during the determined interval, it may be possible to switch off the operation of the roller and to switch off the heating of the heating roller, preventing the film from melted adhesively in the laminator.

### Industrial Applicability

According to the apparatus and method for controlling roller rotation of the laminator of the present invention, the position of the film could be detected in the inside of the laminator, so that whether the laminator normally operates or not could be swiftly known.

Also, a user could find out exactly and reliably the position of the film by electronically detecting method, not by feeling of a user, thereby preventing destruction of the laminator machine itself due to winding of the film on the roller for a long time.

Also, thanks to the construction that the sensors are provided in the front and the back of the roller with respect to the progressing direction of the laminating film, whether the film is wound on the roller or not is detected, whereby reliable operation of the product could be guaranteed.

While the invention has been shown and described with reference to certain preferred embodiments thereof, it will be understood by those skilled in the art that various changes in form and details may be made therein without departing from the scope of the invention as defined by the appended claims.

## Claims

1. An apparatus for controlling roller rotation of a laminator comprising:
Rollers (35,36) installed in even numbers, for applying heat and pressure in order to perform coating using a laminating film(FL);
a film detecting sensor(10) in an entrance side, formed in a front side of the roller(35,36) with respect to the progressing direction of a laminating film(FL), for detecting whether the laminating film(FL) is inserted or not;
a film detecting sensor(15) in an exit side, formed in a rear side of the roller (35,36), for detecting whether the laminating film(FL) is drawn out or not;
a dual-direction rotating motor(20) for rotating the roller(35,36) forward or backward depending on a detecting signal from the film detecting sensors(10,15) in the entrance side and the exit side;
a microprocessor for receiving a detecting signal from the sensor(10,15) and transmitting a controlling signal to the dual-direction rotating motor(20); and
a power transferring unit (25) for transferring power from the dual-direction rotating motor (20) to the rollers (35, 36),
wherein the microprocessor counts time from the moment that insertion of the laminating film(FL) is detected by the film detecting sensor (10) in the entrance side after the laminating film (FL) is inserted into the laminator, detects, from the film detecting sensor(15) in the exit side, the laminating film(FL) after a waiting time T1 that is necessary for normal laminating operation lapses, and if the laminating film (FL) is detected before the waiting time T1 lapses, judges that normal laminating is performed, and, if the laminating film is not detected even after the waiting time T1 lapses, removes the laminating film(FL) by rotating backward the roller(35,36) for a predetermined period of time T2 for reversion rotation under judgment that normal laminating is not performed.

2. The apparatus according to claim 1, wherein the rollers (35, 36) are a heating roller(36) and a pressing roller(35).

3. The apparatus according to claim 1, wherein the film detecting sensor(10) in the entrance side and/or the film detecting sensor(15) in the exit side are an ultraviolet sensor whose light emitting unit and the light receiving unit are provided in one pair, for checking whether the laminating film(FL) is present or not by detecting light reflected from the laminating film(FL).

4. The apparatus according to claim 1, further comprising:
a temperature adjusting member(4) formed on an outer periphery of the laminator, for setting an appropriate temperature depending on each laminating film(FL);
a heat applying unit(37) formed on an outer periphery, spaced from the roller(36), for applying heat on the roller according to designation by the temperature adjusting member(4); and
a temperature sensor(40) formed on an outer periphery of the roller(36), for checking whether the roller(35) reaches an appropriate temperature.

5. A method for controlling roller rotation of a laminator comprising the steps of:
counting time from the moment that insertion of a laminating film(FL) is detected by a film detecting sensor(10) in an entrance side after the laminating film(FL) is inserted into the laminator;
detecting, at a film detecting sensor(15) in an exit side, the laminating film(FL) after a waiting time T1 that is necessary for normal laminating operation lapses; and
if the laminating film(FL) is detected before the waiting time T1 lapses, judging that normal laminating is performed, and, if the laminating film is not detected even after the waiting time T1 lapses, removing the laminating film(FL) by rotating backward the roller(35,36) for a predetermined period of time T2 for reversion rotation under judgment that normal laminating is not performed.

6. The method according to claim 5, wherein the waiting time T1 is within a range of 14-16 second.

7. The method according to claim 5, wherein the time T2 for reversion rotation is within a range of 18-20 second.

8. The method according to claim 5, wherein the rollers(35,36) are automatically rotated forward after the rollers(35,36) are rotated backward for the time T2 for reverse rotation of the motor.

9. The method according to claim 5, wherein in case that the film detecting sensor (15) in the exit side and the film detecting sensor(10) in the entrance side are provided in a front and a back of the heating roller(36), respectively, the waiting time T1 before the film(FL) is detected by the film detecting sensor(15) in the exit side after the film(FL) is detected by the film detecting sensor(10) in the entrance side, is within a range of 8-10 second.

10. The method according to claim 5, wherein in case that that the film detecting sensor(15) in the exit side and the film detecting sensor(10) in the entrance side are provided in a front and a back of the heating roller(36), the time T2 for which the heating roller(36) is rotated backward because the film(FL) is not detected by the film detecting sensor (15) in the exit side, is within a range of 9-10 second.

11. The method according to claim 5, further comprising:
if the laminating film (FL) is not detected by the film detecting sensor(10) in the entrance side, rotating forward the rollers(35,36) under judgment that the laminating film(FL) is completely removed.

12. The method according to claim 5, wherein the rotation of the roller(35,36) and/or heating of the heating roller(36) is switched off, when the film (FL) is not removed in laminator.

## Patentansprüche

1. Eine Vorrichtung zum Steuern der Walzendrehung eines Laminiergeräts, die folgendes aufweist:
Walzen (35, 36), die in geraden Anzahlen installiert sind, zum Anwenden von Hitze und Druck, um eine Beschichtung unter Verwendung einer Laminierungsfolie (FL) durchzuführen;
einen Foliendetektionsensor (10) in einer Eingangsseite, der in einer Vorderseite der Walze (35, 36) bezüglich der Fortschrittsrichtung einer Laminierungsfolie (FL) gebildet ist, um zu delektieren, ob die Laminierungsfolie (FL) eingesetzt ist oder nicht;
einen Foliendetektionsensor (15) in einer Ausgangsseite, der in einer Hinterseite der Walze (35, 36) gebildet ist, um zu detektieren, ob die Laminierungsfolie (FL) herausgezogen ist oder nicht;
einen Dualrichtungsdrehmotor (20) zum Drehen der Walze (35, 36) vorwärts oder rückwärts, und zwar abhängig von einem Detektionssignal von den Foliendetektionssensoren (10, 15) in der Eingangsseite und Ausgangsseite;
einen Mikroprozessor zum Empfangen eines Detektionssignals von dem Sensor (10, 15) und zum Übertragen eines Steuersignals an den Dualrichtungsdrehmotor (20); und
eine Leistungsübertragungseinheit (25) zum Übertragen von Leistung von dem Dualrichtungsdrehmotor (20) an die Walzen (35, 36),
wobei der Mikroprozessor die Zeit von dem Moment zählt, an dem das Einsetzen der Laminierungsfolie (FL) von dem Foliendetektionssensor (10) in der Eingangsseite detektiert wird, nachdem die Laminierungsfolie (FL) in das Laminiergerät eingesetzt wird, detektiert, von dem Foliendetektionssensor (15) in der Ausgangsseite, die Laminierungsfolie (FL) nachdem eine Wartezeit T1 vergeht, die für den normalen Laminierbetrieb notwendig ist, und falls die Laminierungsfolie (FL) detektiert wird, bevor die Wartezeit T1 vergeht, bewertet, dass ein normales Laminieren durchgeführt wird, und falls die Laminierungsfolie nicht detektiert wird, sogar nachdem die Wartezeit T1 vergeht, die Laminierungsfolie (FL) durch Rückwärtsdrehen der Walze (35, 36) für eine vorbestimmte Zeitperiode T2 für eine Umkehrrotation entfernt, unter der Bewertung, dass ein normales Laminieren nicht durchgerührt wird.

2. Die Vorrichtung nach Anspruch 1, wobei die Walzen (35, 36) eine Heizwalze (36) und eine Druckwalze (35) sind.

3. Die Vorrichtung der Anspruch 1, wobei der Foliendetektionssensor (10) in der Eingangsseite und/oder der Foliendetektionssensor (15) in der Ausgangsseite ein Ultraviolettsensor sind, dessen lichtemittierende Einheit und lichtempfangene Einheit in einem Paar vorgesehen sind, um zu überprüfen, ob die Laminierungsfolie (FL) vorhanden ist oder nicht, und zwar durch Delektieren von Licht, das von der Laminierungsfolie (FL) reflektiert wird.

4. Die Vorrichtung nach Anspruch 1, die ferner folgendes aufweist:
ein Temperatureinstellglied (4), das an einem äußeren Umfang des Laminiergeräts gebildet ist, um eine geeignete Temperatur abhängig von jeder Laminierungsfolie (FL) einzustellen;
eine Hitzeanwendungseinheit (37), die an einem äußeren Umfang gebildet ist, beabstandet von der Walze (36), um Hitze auf die Walze gemäß einer Bestimmung durch das Temperatureinstellglied (4) anzuwenden; und
einen Temperatursensor (40), der in einem äußeren Umfang der Walze (36) gebildet ist, um zu überprüfen, ob die Walze (35) eine geeignete Temperatur erreicht.

5. Ein Verfahren zum Steuern der Walzendrehung eines Laminiergetäts, das die folgenden Schritte aufweist:
Zählen der Zeit von dem Moment, in dem das Einsetzen einer Laminierungsfolie (FL) von einem foliendetektionssensor (10) in einer Eingangsseite detektiert wird, nachdem die Laminierungsfolie (FL) in das Laminiergerät eingesetzt wird;
Detektieren, bei einem Foliendetektionssensor (15) in einer Ausgangsseite, der Laminierungsfolie (FL), nachdem eine Wartezeit T1 vergeht, die für den normalen Laminierbetrieb notwendig ist; und
falls die Laminierungsfolie (FL) detektiert wird, bevor die Wartezeit T1 vergeht, Bewerten, dass ein normales Laminieren durchgeführt wird, und falls die Laminierungsfolie nicht detektiert wird, sogar nachdem die Wartezeit T1 vergeht, Entfernen der Laminierungsfolie (FL) durch Rückwärtsdrehen der Walze (35, 36) für eine vorbestimmte Zeitperiode T2 für eine Umkehrdrehung unter der Bewertung, dass ein normales Laminieren nicht durchgeführt wird.

6. Das Verfahren nach Anspruch 5, wobei die Wartezeit T1 innerhalb eines Bereichs von 14-16 Sekunden ist.

7. Das Verfahren nach Anspruch 5, wobei die Zeit T2 für eine Umkehrdrehung innerhalb eines Bereichs von 18-20 Sekunden ist.

8. Das Verfahren nach Anspruch 5, wobei die Walzen (35, 36) automatisch vorwärts gedreht werden, nachdem die Walzen (35, 36) rückwärts für die Wartezeit T2 für eine Umkehrdrehung des Motors gedreht werden.

9. Das Verfahren nach Anspruch 5, wobei in dem Fall, dass der Foliendetektionssensor (15) in der Ausgangsseite und der Foliendetektionssensor (10) in der Eingangsseite in einer Vorderseite bzw. einer Hinterseite der Heizwalze (36) vorgesehen sind, die Wartezeit T1, bevor die Folie (FL) von dem foliendetektionssensor (15) in der Ausgangsseite detektiert wird, nachdem die Folie (FL) von dem Foliendetektionssensor (10) in der Eingangsseite detektiert wird, innerhalb eines Bereichs von 8-10 Sekunden ist.

10. Das Verfahren nach Anspruch 5, wobei in dem Fall, dass der Foliendetektionssensor (15) in der Ausgangsseite und der Foliendetektionssensor (10) in der Eingangsseite in einer Vorderseite und einer Hinterseite der Heizwalze (36) vorgesehen sind, die Zeit T2, für welche die Heizwalze (36) rückwärts gedreht wird, weil die Folie (FL) nicht von dem Foliendetektionssensor (15) in der Ausgangsseite detektiert wird, innerhalb eines Bereichs von 9-10 Sekunden ist.

11. Das Verfahren nach Anspruch 5, das ferner folgendes aufweist:
falls die Laminierungsfolie (FL) nicht von dem Foliendetektionssensor (10) in der Eingangsseite detektiert wird, Vorwärtsdrehen der Walzen (35, 36) unter der Bewertung, dass die Laminierungsfolie (FL) vollständig entfernt ist.

12. Das Verfahren nach Anspruch 5, wobei die Drehung der Walze (35, 36) und/oder das Heizen der Heizwalze (36) ausgeschaltet wird, wenn die Folie (FL) in dem Laminiergerät nicht entfernt ist.

## Revendications

1. Appareil de commande de rotation de cylindre d'une pelliculeuse comprenant :
des cylindres (35, 36) installés en nombres pairs, destinés à appliquer de la chaleur et de la pression afin de réaliser un revêtement au moyen d'un film de lamination (FL) ;
un capteur de détection de film (10) dans un côté entrée, formé dans un côté avant du cylindre (35, 35) par rapport à la direction de progression d'un film de lamination (FL), destiné à détecter si le film de lamination (FL) est inséré ou non ;
un capteur de détection de film (15) dans un côté sortie, formé dans un côté arrière du cylindre (35, 36), destiné à détecter si le film de lamination (FL) est tiré ou non à l'extérieur ;
un moteur rotatif bidirectionnel (20) destiné à faire tourner le cylindre (35, 36) vers l'avant ou vers l'arrière en fonction d'un signal de détection provenant des capteurs de détection de film (10, 15) dans le côté entrée et le côté sortie ;
un microprocesseur destiné à recevoir un signal de détection provenant du capteur (10, 15) et à transmettre un signal de commande au moteur rotatif bidirectionnel (20) ; et
une unité de transfert de puissance (25) destinée à transférer une puissance du moteur rotatif bidirectionnel (20) aux cylindres (35, 36),
dans lequel le microprocesseur compte le temps à partir du moment où l'insertion du film de lamination (FL) est détectée par le capteur de détection de film (10) dans le côté entrée une fois que le film de lamination (FL) est inséré dans la pelliculeuse, détecte, à partir du capteur de détection de film (15) dans le côté sortie, le film de lamination (FL) une fois qu'un temps d'attente T1 qui est nécessaire pour l'opération de pelliculage normale est écoulé et, si le film de lamination (FL) est détecté avant que le temps d'attente T1 soit écoulé, estime que le pelliculage normal est réalisé et, si le film de lamination n'est pas détecté même une fois que le temps d'attente T1 est écoulé, retire le film de lamination (FL) en faisant tourner vers l'arrière le cylindre (35, 36) pendant une période de temps prédéterminée T2 pour une rotation inverse lorsqu'il est estimé que le pelliculage normale n'est pas réalisé.

2. Appareil selon la revendication 1, dans lequel les cylindres (35, 36) sont un cylindre chauffant (36) et un cylindre presseur (35).

3. Appareil selon la revendication 1, dans lequel le capteur de détection de film (10) dans le côté entrée et/ou le capteur de détection de film (15) dans le côté sortie sont un capteur UV dont l'unité émettrice de lumière et l'unité réceptrice de lumière sont prévues sous forme d'un couple, pour vérifier si le film de lamination (FL) est ou n'est pas présent en détectant la lumière réfléchie à partir du film de lamination (FL).

4. Appareil selon la revendication 1, comprenant en outre :
un élément de réglage de température (4) formé sur une périphérie externe de la pelliculeuse, destiné à définir une température appropriée en fonction de chaque film de lamination (FL) ;
une unité d'application de chaleur (37) formée sur une périphérie externe, espacée du cylindre (35), destinée à appliquer de la chaleur sur le cylindre en fonction de la désignation par l'élément de réglage de température (4) ; et
un capteur de température (40) formé sur une périphérie externe du cylindre (36), destiné à vérifier si le cylindre (35) atteint une température appropriée.

5. Procédé de commande de rotation de cylindre d'une pelliculeuse comprenant les étapes consistant à :
compter le temps à partir du moment où l'insertion d'un film de lamination (FL) est détectée par un capteur de détection de film (10) dans un côté entrée une fois que le film de lamination (FL) est inséré dans la pelliculeuse ;
détecter, au niveau d'un capteur de détection de film (15) dans un côté sortie, le film de lamination (FL) une fois qu'un temps d'attente T1 qui est nécessaire pour l'opération de pelliculage normale est écoulé ; et
si le film de lamination (FL) est détecté avant que le temps d'attente T1 soit écoulé, estimant que le pelliculage normal est réalisé et, si le film de lamination n'est pas détecté même une fois que le temps d'attente T1 est écoulé, retirer le film de lamination (FL) en faisant tourner vers l'arrière le cylindre (35, 36) pendant une période de temps prédéterminée T2 pour la rotation inverse lorsqu'il est estimé que le pelliculage normal n'est pas réalisé.

6. Procédé selon la revendication 5, dans lequel le temps d'attente T1 est dans une plage de 14 à 16 secondes.

7. Procédé selon la revendication 5, dans lequel le temps d'attente T2 pour la rotation inverse est dans une plage de 18 à 20 secondes.

8. Procédé selon la revendication 5, dans lequel les cylindres (35, 36) sont mis automatiquement en rotation vers l'avant une fois que les cylindres (35, 36) ont été tournés vers l'arrière pendant le temps T2 pour une rotation inverse du moteur.

9. Procédé selon la revendication 5, dans lequel, dans le cas où le capteur de détection de film (15) dans le côté sortie et le capteur de détection de film (10) dans le côté entrée se trouveraient sur un côté avant et un côté arrière du cylindre chauffant (36), respectivement, le temps d'attente T1 avant que le film (FL) ne soit détecté par le capteur de détection de film (15) dans le côté sortie une fois que le film (FL) est détecté par le capteur de détection de film (10) dans le côté entrée se trouve dans une plage de 8 à 10 secondes.

10. Procédé selon la revendication 5, dans lequel, dans le cas où le capteur de détection de film (15) dans le côté sortie et le capteur de détection de film (10) dans le côté entrée se trouveraient sur un côté avant et un côté arrière du cylindre chauffant (36), le temps T2 pendant lequel le cylindre chauffant (36) est tourné vers l'arrière car le film (FL) n'est pas détecté par le capteur de détection de film (15) dans le côté sortie se trouve dans une plage de 9 à 10 secondes.

11. Procédé selon la revendication 5, consistant en outre :
si le film de lamination (FL) n'est pas détecté par le capteur de détection de film (10) dans le côté entrée, à faire tourner vers l'avant les cylindres (35, 36) lorsqu'il est estimé que le film de lamination (FL) est complètement retiré.

12. Procédé selon la revendication 5, dans lequel la rotation du cylindre (35, 36) et/ou le chauffage du cylindre chauffant (36) est arrêté(e), lorsque le film (FL) n'est pas retiré dans la pelliculeuse.
